# EUROPEAN PATENT SPECIFICATION

(11) **EP 3 440 131 B1**
(45) Date of publication and mention of the grant of the patent: **23.03.2022**
(21) Application number: 17716170.0
(22) Date of filing: 05.04.2017
(51) Int. Cl.: C08K 3/34, C08K 3/04, B60C 1/00, C01B 33/22

(54) **BARRIER COMPOSITION COMPRISING A TALC PARTICULATE**
BARRIEREZUSAMMENSETZUNGEN MIT TALKPARTIKELMATERIAL
COMPOSITION DE BARRIÈRE COMPRENANT UN MATÉRIAU PARTICULAIRE DE TALC

(30) Priority: 06.04.2016 EP 16305402
(43) Date of publication of application: 13.02.2019
(73) Proprietor: IMERTECH SAS, 75015 Paris (FR)
(72) Inventor: CREPIN-LEBLOND, Jérôme, 31770 Colomiers (FR); MÉLI, Gilles, 31410 Le Fauga (FR)
(74) Representative: Haseltine Lake Kempner LLP
(86) International application number: PCT/EP2017/058073
(87) International publication number: WO 2017/174637

(56) References cited:
- US-A1- 2008 097 021
- US-A1- 2010 139 829
- US-A1- 2011 097 255

## Description

### TECHNICAL FIELD

The present invention relates to a barrier polymer composition comprising a particulate talc having a d₅₀ ranging from 7 to 13 µm, a d₂₅ ranging from 4.5 to 8.5 µm, and a BET surface area equal to or less than 23 m²/g.

The talc particulate may be used to increase the barrier properties of a polymer composition, for example in a tire inner lining. The present invention thus also relates to a polymer composition comprising said talc particulate and in particular to a tire inner lining comprising said polymer composition. The present invention further relates to methods of making the talc particulate, polymer compositions, tire inner lining and tires disclosed herein.

### BACKGROUND

Talc particulates can be used as fillers in various compositions such as plastics, papers and coatings. The talc particulates may, for example, provide the compositions with particular properties which may vary depending on the nature of the talc. For example, talc may affect the permeability of a composition to gases and/or liquids. For example, talc may affect the mechanical properties of a composition (e.g. the stiffness and/or tensile strength of a composition). One use of talc is in the inner linings of tires to decrease their permeability. For example, talc may be used to at least partially replace carbon black in the inner linings of tires. This may, for example, reduce tire thickness and/or tire weight, improve the tire rolling resistance, improve tire handling, improve tire cornering, improve tire wear and/or improve fuel consumption.

It is therefore desirable to provide alternative or improved talc particulates that are suitable for or intended for use in barrier compositions, in particular suitable for or intended for use in barrier compositions in which good barrier properties and mechanical properties are desirable.

### SUMMARY

In accordance with a first aspect of the present invention there is provided a barrier polymer composition comprising a particulate talc having a d₅₀ ranging from 7 to 13 µm, a d₂₅ ranging from 4.5 to 8.5 µm, and a BET surface area equal to or less than 23 m²/g.

In certain embodiments, the barrier composition is a polymer composition comprising an elastomer and a talc particulate according to any aspect or embodiment of the present invention. Thus, in accordance with a further aspect of the present invention there is provided a polymer composition comprising an elastomer and a talc particulate according to any aspect or embodiment of the present invention. In accordance with a third aspect of the present invention there is provided a tire inner lining comprising a polymer composition according to any aspect or embodiment of the present invention.

In accordance with a fourth aspect of the present invention there is provided a tire comprising a tire inner lining according to any aspect or embodiment of the present invention.

In accordance with a fifth aspect of the present invention there is provided a use of the talc particulate according to any aspect or embodiment of the present invention to decrease the permeability of a polymer composition. In certain embodiments, the mechanical properties of the polymer composition (e.g. the tensile strength, elongation at break, elastic modulus (100% or 300%) or Shore A hardness) are not substantially altered by the inclusion of the talc particulate.

In accordance with a sixth aspect of the present invention there is provided a use of the talc particulate according to any aspect or embodiment of the present invention in an inner lining of a tire. In certain embodiments, the talc particulate decreases the permeability (e.g. oxygen transmission rate) of the inner lining.

In accordance with a seventh aspect of the present invention there is provided a method for making a talc according to any aspect or embodiment of the present invention.

In accordance with an eighth aspect of the present invention there is provided a method for making a polymeric composition according to any aspect or embodiment of the present invention.

In accordance with a ninth aspect of the present invention there is provided a method for making a tire inner lining according to any aspect or embodiment of the present invention.

In accordance with a tenth aspect of the present invention there is provided a method for making a tire according to any aspect or embodiment of the present invention.

Certain embodiments of the present invention may provide one or more of the following advantages:
- decreased permeability (e.g. decreased oxygen transmission rate or decreased permeation);
- increased or no substantial difference in mechanical properties (e.g. viscosity, curing time, tensile strength, elongation at break, elastic modulus, Shore A hardness, De Mattia fatigue, tear resistance)
- partial replacement of carbon black and/or other inorganic particulates in a barrier or polymer composition;
- reduced tire thickness and/or weight;
- improved tire rolling resistance;
- improved tire handling;
- improved tire cornering;
- improved tire wear;
- improved fuel consumption.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

A barrier composition comprising an inorganic particulate is disclosed herein. It has surprisingly and advantageously been found that the inorganic particulate disclosed herein can be used in polymer compositions to provide barrier properties that are at least as good or are improved compared to polymer compositions that do not comprise an inorganic particulate or that comprise a different inorganic particulate that is currently used in the same type of polymer compositions. Though talc is referred to in the examples herein, it should be understood that the invention should not be limited to talc and can include other inorganic particulate (e.g. mica). The talc disclosed herein may therefore be used to at least partially replace any other inorganic particulates (e.g. carbon black) present in a polymer composition. This may, for example, enable a smaller mass or volume or particulates to be used in the polymer compositions. In addition, it has surprisingly and advantageously been found that incorporation of the talc disclosed herein into polymer compositions does not substantially alter their mechanical properties.

### Talc Particulate

The term "talc" refers to either magnesium silicate mineral, or the mineral chlorite (magnesium aluminium silicate), or a mixture of the two, optionally associated with other minerals, for example, dolomite and/or magnesite. The term "talc" may also refer to a synthetic talc, also known as talcose.

The talc particulate may, for example, be obtained from a lamellar talc ore. The talc particulate may not, for example, be obtained from a microcrystalline ore. The talc particulate may, for example, be a wet milled talc.

The talc particulate may, for example, be a blend of two or more talcs. For example, one of the two or more talcs may be in accordance with the talc particulate disclosed herein. For example, one of the two or more talcs may be a micronized talc, for example a micronized talc having a d₅₀ ranging from about 1 µm to about 3 µm, for example from about 1.5 µm to about 2.5 µm, for example from about 2 µm to about 2.4 µm.

The talc particulate disclosed herein has a d₅₀ ranging from about 7 µm to about 13 µm. For example, the talc particulate disclosed herein may have a d₅₀ ranging from about 7.5 µm to about 12.5 µm or from about 8 µm to about 12 µm or from about 8.5 µm to about 11.5 µm or from about 9 µm to about 11 µm or from about 9.5 µm to about 10.5 µm.

The talc particulate disclosed herein may, for example, have a d₉₅ ranging from about 20 µm to about 36 µm. For example, the talc particulate disclosed herein may have a d₉₅ ranging from about 21 µm to about 35 µm or from about 22 µm to about 34 µm or from about 23 µm to about 33 µm or from about 24 µm to about 32 µm or from about 25 µm to about 31 µm or from about 26 µm to about 30 µm or from about 27 µm to about 29 µm or from about 28 µm to about 29 µm.

The talc particulate disclosed herein may, for example, have a d₇₅ ranging from about 10 µm to about 22 µm. For example, the talc particulate disclosed herein may have a d₇₅ ranging from about 11 µm to about 21 µm or from about 12 µm to about 20 µm or from about 13 µm to about 19 µm or from about 14 µm to about 18 µm or from about 15 µm to about 17 µm or from about 16 µm to about 17 µm.

The talc particulate disclosed has a d₂₅ ranging from about 4.5 µm to about 8.5 µm or from about 5 µm to about 8 µm or from about 5.5 µm to about 7.5 µm or from about 6 µm to about 7 µm.

Unless otherwise stated, particle size measurements are obtained by wet Malvern laser scattering (standard AFNOR NFX11-666 or ISO 13329-1). In this method, the size of particles in powders, suspensions and emulsions may be measured using the diffraction of a laser beam, based on an application of Mie theory. Such a machine, for example a Malvern Mastersizer S (as supplied by Malvern Instruments) provides measurements and a plot of the cumulative percentage by volume of the particles which have a size, referred to in the art as "equivalent spherical diameter" (esd) less than given esd values. The mean particle size d₅₀ is the value determined in this way of the particle esd at which there are 50% by volume of the particles which have an esd less than that d₅₀ value.

The talc may, for example, have a lamellarity index equal to or less than about 5. For example, the talc may have a lamellarity index equal to or less than about 4.9 or equal to or less than about 4.8 or equal to or less than about 4.7 or equal to or less than about 4.6 or equal to or less than about 4.5 or equal to or less than about 4.4 or equal to or less than about 4.3 or equal to or less than about 4.2 or equal to or less than about 4.1 or equal to or less than about 4 or equal to or less than about 3.9 or equal to or less than about 3.8 or equal to or less than about 3.7 or equal to or less than about 3.6 or equal to or less than about 3.5 or equal to or less than about 3.4 or equal to or less than about 3.3 or equal to or less than about 3.2 or equal to or less than about 3.1 or equal to or less than about 3. The talc may, for example, have a lamellarity index equal to or greater than about 1.5 or equal to or greater than about 1.6 or equal to or greater than about 1.7 or equal to or greater than about 1.8 or equal to or greater than about 1.9 or equal to or greater than about 2 or equal to or greater than about 2.1 or equal to or greater than about 2.2 or equal to or greater than about 2.3 or equal to or greater than about 2.4 or equal to or greater than about 2.5. For example, the talc may have a lamellarity index ranging from about 2 to about 5 or from about 2.2 to about 5 or from about 2.5 to about 5 or from about 2.8 to about 5.

The lamellarity index is defined as (dₘₑₐₙ - d₅₀)/d₅₀ in which "dₘₑₐₙ" is the value of the mean particle size (d₅₀) obtained by a particle size measurement by wet Malvern laser scattering (standard AFNOR NFX11-666 or ISO 13329-1) as described above and "d₅₀", for the purposes of the lamellarity index calculation, is the value of the median diameter obtained by sedimentation using a sedigraph (standard AFNOR X11-683 or ISO 13317-3). The sedigraph method uses a Sedigraph 5100 machine supplied by Micromeritics Instruments Corporation, Norcross, Georgia, USA (www.micromeritics.com), referred to as "Micromeritics Sedigraph 5100 Unit". Such as machine provides measurements and a plot of the cumulative percentage by weight of particles having a size, referred to in the art as the "equivalent spherical diameter" (esd), less than given esd values. The mean particle size d₅₀ is the value determined in this way of the particle esd at which there are 50% by weight of the particles which have an esd less than that d₅₀ value. Reference may be made to the article by G. Baudet and J.P. Rona, Ind. Min. Miners et Carr. Les techn. June, July 1990, pp 55-61, incorporated herein by reference, which shows that this index is correlated to the mean ratio of the largest dimension of the particle to its smallest dimension.

The talc particulate has a BET surface area equal to or less than about 23 m²/g. For example, the talc particulate may have a BET surface area equal to or less than about 22 m²/g equal to or less than about 21 m²/g or equal to or less than about 20 m²/g or equal to or less than about 19 m²/g or equal to or less than about 18 m²/g or equal to or less than about 17 m²/g or equal to or less than about 16 m²/g or equal to or less than about 15 m²/g or equal to or less than about 14 m²/g or equal to or less than about 13 m²/g or equal to or less than about 12 m²/g. The talc particulate may, for example, have a BET surface area equal to or greater than about 5 m²/g or equal to or greater than about 6 m²/g or equal to or greater than about 7 m²/g or equal to or greater than about 8 m²/g or equal to or greater than about 9 m²/g or equal to or greater than about 10 m²/g or equal to or greater than about 11 m²/g. The talc particulate may, for example, have a BET surface area ranging from about 5 to about 23 m²/g or from about 8 to about 23 m²/g or from about 10 to about 23 m²/g. The talc particulate may, for example, have a BET surface area ranging from about 5 to about 20 m²/g or from about 8 to about 20 m²/g or from about 10 to about 20 m²/g.

The BET surface area is defined as the area of the surface of the particles of the talc particulate with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277, or any method equivalent thereto).

### Barrier Compositions

Barrier compositions are any compositions that serve to reduce or prevent the passage of gases and/or liquids. The barrier composition may, for example, be a polymer composition comprising, consisting essentially of or consisting of an elastomer and a talc particulate according to any aspect or embodiment disclosed herein.

The elastomer may, for example, be selected from butyl rubber (copolymer of isobutylene and isoprene), chlorinated butyl rubber, brominated butyl rubber, polyisoprene (e.g. synthetic polyisoprene or natural polyisoprene), natural rubber, styrene butadiene, nitrile rubber (a copolymer of butadiene and acrylonitrile), hydrogenated nitrile rubber, a copolymer of isobutylene and paramethylstyrene, a brominated copolymer of isobutylene and paramethylstyrene, ethylene propylene rubber, ethylene propylene diene rubber, epichlorohydrin rubber, polyacrylic rubber, silicone rubber, fluorosilicone rubber, polyether block amides, chlorosulfonated polyethylene, ethylene-vinyl acetate, or any copolymer or blend thereof. The present invention may tend to be discussed in terms of butyl rubber, for example BrIIR 2030. However, the present invention should not be construed as being limited as such.

The polymer composition may be cured/vulcanized. Alternatively, the polymer composition may not be cured/vulcanized. Vulcanization may be conducted in the presence of a sulphur vulcanizing agent, such as, elemental sulphur or sulphur-donating vulcanizing agents, for example, an amine disulphide, polymeric disulphide or sulphur olefin adducts. Sulphur vulcanizing agents may be used in an amount ranging from about 0.2 to about 5 phr, for example from about 0.5 to about 3 phr.

The polymer composition may, for example, comprise from about 10 phr to about 80 phr of the talc particulate disclosed herein. For example, the polymer composition may comprise from about 15 to about 75 phr or from about 20 to about 70 phr or from about 25 to about 65 phr or from about 30 to about 60 phr or from about 35 to about 55 phr or from about 40 to about 50 phr of the talc particulate. The term "phr" relates to parts by weight of a particular ingredient per 100 parts by weight of polymer.

The polymer composition may comprise one or more additional ingredients. For example, the polymer composition may further comprise carbon black (a form of paracrystalline carbon produced by incomplete combustion of heavy petroleum products). For example, the polymer composition may consist essentially of or consist of an elastomer, a talc particulate as disclosed herein and carbon black.

The polymer composition may, for example, comprise from about 10 to about 100 phr of carbon black. For example, the polymer composition may comprise from about 20 to about 90 phr or from about 30 to about 80 phr or from about 40 to about 70 phr or from about 50 to about 60 phr of carbon black.

The polymer composition may, for example, comprise from about 10 vol% to about 40 vol% total talc particulate and carbon black. For example, the total amount of talc particulate and carbon black present in the polymer composition may range from about 15 vol% to about 35 vol% or from about 20 vol% to about 30 vol%.

Other conventional ingredients may also be present in the polymer compositions. For example, one or more curing aids, tackifier resins, plasticizers, processing aids, other minerals (e.g. silica (e.g. precipitated silica), clay, mica or combinations thereof), accelerators (e.g. primary or secondary accelerators, e.g. amines, disulphides, guanidines, thioureas, thiazoles, thiurams, sulfenamides, dithiocarbamate, xanthates), coupling agents (e.g. bis(3-trialkyoxysilylpropyl polysulphides), antioxidants, antiozonants, stearic acid, activators, lubricants, anti-degradants, waxes and oils may be present in the polymer compositions. Each additional ingredient may, for example, be present in the polymer composition in an amount ranging from about 0.2 to about 5 phr, for example from about 0.5 to about 3 phr.

The polymer composition may, for example, have an oxygen transmission rate equal to or less than about 180 cm³/m²/day. For example, the polymer composition may have an oxygen transmission rate equal to or less than about 170 cm³/m²/day or equal to or less than about 160 cm³/m²/day or equal to or less than about 150 cm³/m²/day or equal to or less than about 140 cm³/m²/day or equal to or less than about 130 cm³/m²/day or equal to or less than about 120 cm³/m²/day or equal to or less than about 110 cm³/m²/day. For example, the polymer composition may have an oxygen transmission rate equal to or greater than about 10 cm³/m²/day, for example equal to or greater than about 20 cm³/m²/day or equal to or greater than about 40 cm³/m²/day or equal to or greater than about 50 cm³/m²/day or equal to or greater than about 60 cm³/m²/day or equal to or greater than about 70 cm³/m²/day or equal to or greater than about 80 cm³/m²/day.

The oxygen transmission rate may be measured after curing/vulcanization of any polymer (e.g. elastomer) present in the composition, according to ASTM D3985 or ASTM F1927 or ASTM F2622.

The oxygen transmission rate of the polymer composition may be no more than about 20% less than the oxygen transmission rate of a corresponding polymer composition that does not comprise the talc particulate disclosed herein (i.e. a composition that is identical to said polymer composition except that it does not comprise the talc particulate). The "corresponding polymer composition" may comprise a different talc that is not in accordance with the talc particulate disclosed herein. Alternatively the "corresponding polymer composition" may not comprise any talc particulate. For example, the oxygen transmission rate of the polymer composition may be no more than about 15% less or no more than about 10% less or no more than about 5% less than the oxygen transmission rate of a corresponding polymer composition that does not comprise the talc particulate. For example, the oxygen transmission rate of the polymer composition may be approximately the same, for example the same, as the oxygen transmission rate of a corresponding polymer composition that does not comprise the talc particulate. The oxygen transmission rate of the polymer composition may be up to about 60% greater or up to about 55% greater or up to about 50% greater or up to about 45% greater or up to about 40% greater or up to about 35% or up to about 30% greater than the oxygen transmission rate of a corresponding polymer composition that does not comprise the talc particulate disclosed herein.

The polymer composition may, for example, have a tensile strength of at least about 6 MPa. For example, the polymer composition may have a tensile strength equal to or greater than about 6.1 MPa or equal to or greater than about 6.2 MPa or equal to or greater than about 6.3 MPa or equal to or greater than about 6.4 MPa or equal to or greater than about 6.5 MPa or equal to or greater than about 6.6 MPa or equal to or greater than about 6.7 MPa or equal to or greater than about 6.8 MPa or equal to or greater than about 6.9 MPa or equal to or greater than about 7 MPa. For example, the polymer composition may have a tensile strength equal to or less than about 9 MPa or equal to or less than about 8.5 MPa or equal to or less than about 8 MPa.

Tensile strength may be measured after curing/vulcanization of any polymer (e.g. elastomer) present in the composition, according to ASTM D412.

The polymer composition may, for example, have an elongation at break of at least about 700%. For example, the polymer composition may have an elongation at break of at least about 710% or at least about 720% or at least about 730% or at least about 740% or at least about 750% or at least about 760% or at least about 770% or at least about 780% or at least about 790% or at least about 800% or at least about 810% or at least about 820% or at least about 830% or at least about 840% or at least about 850%. For example, the polymer composition may have an elongation at break of up to about 1000% or up to about 950% or up to about 900%.

Elongation at break may be measured after curing/vulcanization of any polymer (e.g. elastomer) present in the composition, according to ASTM D412.

The polymer composition may, for example, have an elastic modulus (100%) of at least about 0.6 MPa. For example, the polymer composition may have an elastic modulus (100%) of at least about 0.7 MPa or at least about 0.8 MPa or at least about 0.9 MPa or at least about 1 MPa or at least about 1.1 MPa or at least about 1.2 MPa. For example, the polymer composition may have an elastic modulus (100%) of up to about 1.5 MPa or up to about 1.4 MPa or up to about 1.3 MPa.

The polymer composition may, for example, have an elastic modulus (300%) of at least about 1.8 MPa. For example, the polymer composition may have an elastic modulus (300%) of at least about 1.9 MPa or at least about 2 MPa or at least about 2.1 MPa or at least about 2.2 MPa or at least about 2.3 MPa. For example, the polymer composition may have an elastic modulus (300%) of up to about 3 MPa or up to about 2.8 MPa or up to about 2.6 MPa or up to about 2.5 MPa.

The elastic modulus (100% or 300%) may, for example, be measured after curing/vulcanization of any polymer (e.g. elastomer) present in the composition, according to ASTM D1456.

The polymer composition may, for example, have a Shore A hardness of at least about 35. For example, the polymer composition may have a Shore A hardness of at least about 36 or at least about 37 or at least about 38 or at least about 39 or at least about 40. The polymer composition may, for example, have a Shore A hardness up to about 45 or up to about 44 or up to about 43 or up to about 42 or up to about 41.

The Shore A hardness may be measured after curing/vulcanization of any polymer (e.g. elastomer) present in the composition, according to ASTM D2240.

The polymer composition may, for example, have a tear resistance of at least about 20 kN/mm. For example, the polymer composition may have a tear resistance of at least about 21 kN/mm or at least about 22 kN/mm or at least about 23 kN/mm or at least about 24 kN/mm or at least about 25 kN/mm. For example, the polymer composition may have a tear resistance up to about 40 kN/mm or up to about 39 kN/mm or up to about 38 kN/mm or up to about 37 kN/mm or up to about 36 kN/mm or up to about 35 kN/mm or up to about 30 kN/mm.

The tear resistance may be measured after curing/vulcanization of any polymer (e.g. elastomer) present in the composition, according to ASTM D624.

The mechanical properties of the polymer composition may differ by no more than about 30% (+ or - 30%) in comparison to the mechanical properties of a corresponding polymer composition that does not comprise the talc particulate disclosed herein (i.e. a composition that is identical to said polymer composition except that it does not comprise the talc particulate). The "corresponding polymer composition" may comprise a different talc that is not in accordance with the talc particulate disclosed herein. Alternatively the "corresponding polymer composition" may not comprise any talc particulate. "Mechanical properties" refers to one or more of tensile strength, elongation at break, elastic modulus (e.g. 100% or 300% elastic modulus), Shore A hardness and tear resistance.

The mechanical properties of the polymer composition may, for example, differ by no more than about 29% or no more than about 28% or no more than about 27% or no more than about 26% or no more than about 25% or no more than about 24% or no more than about 23% or no more than about 22% or no more than about 21% or no more than about 20% or no more than about 19% or no more than about 18% or no more than about 17% or no more than about 16% or no more than about 15% or no more than about 14% or no more than about 13% or no more than about 12% or no more than about 11% or no more than about 10%. For example, the mechanical properties of the polymer composition may differ by 0% to about 30% or from about 1% to about 20 % or from about 5 % to about 10%.

In other embodiments, the talc particulates disclosed herein may be used in barrier compositions and/or membranes.

### Products

The polymer compositions disclosed herein may, for example, be used to make various products. For example, the polymer compositions disclosed herein may be used to make the inner lining of tires. Thus, also disclosed herein is a tire inner lining comprising a polymer composition according to any aspect or embodiment disclosed herein. Also disclosed herein is a tire comprising an inner lining according to any aspect or embodiment disclosed herein.

The tire may, for example, be any vehicle tire, for example a passenger tire or truck tire. The tire may, for example, be a pneumatic tire. The tire may, for example, comprise one or more of a tire carcass, belt, tread, undertread, shoulder, side wall, bead heel and rim.

The inner lining of the tire may, for example, have a thickness ranging from about 0.01 cm to about 1 cm, for example from about 0.05 cm to about 1 cm, for example from about 0.05 cm to about 0.5 cm. This may depend on the size and intended use of the tire.

### Uses

The talc particulates disclosed herein (including all aspects and embodiments thereof, including all embodiments thereof) may be used to provide barrier properties in a barrier composition. A barrier composition is any composition that is used to reduce or prevent the passage of one or more gases and/or liquids through said composition.

The talc particulates disclosed herein may, for example, be used to decrease the permeability of a polymer composition. For example, the talc particulates disclosed herein may be used to decrease the oxygen transmission rate of a polymer composition. For example, incorporation of the talc particulate disclosed herein into a polymer composition may, for example, decrease the oxygen transmission rate of a polymer composition by at least about 10% or at least about 15% or at least about 20% or at least about 25% or at least about 30% or at least about 35% or at least about 40% or at least about 45% or at least about 50%.

The mechanical properties of the polymer composition into which the talc particulate is incorporated may not change by more than about 30% (+ or - 30%). For example, the mechanical properties of the polymer composition into which the talc particulate is incorporated may not change by more than about 25% or more than about 20% or more than about 15% or more than about 10%. "Mechanical properties" includes, for example, tensile strength, elongation at break, elastic modulus (100% and/or 300%), Shore A hardness and tear resistance.

The talc particulates disclosed herein may, for example, be used to at least partially replace carbon black or any other inorganic particulate in a polymer composition. For example, the talc particulates disclosed herein may be used to replace at least about 20 wt% or at least about 30 wt% or at least about 40 wt% or at least about 50 wt% of carbon black and/or any other inorganic particulate in a polymer composition. For example, the talc particulate disclosed herein may be used to replace up to about 100 wt% or up to about 90 wt% or up to about 80 wt% of the carbon black and/or any other inorganic particulate in a polymer composition.

The talc particulates disclosed herein may, for example, be used in a tire inner lining. For example, the talc particulates disclosed herein may be used to decrease the permeability (e.g. decrease the oxygen transmission rate) of a tire inner lining. The oxygen transmission rate and mechanical properties of a tire inner lining may change as described above in relation to polymer compositions.

### Methods

There is also disclosed herein methods for making the talc particulates, barrier compositions, polymer compositions, tire inner linings and tires disclosed herein, including all aspects and embodiments thereof.

The talc particulates may, for example, be made by grinding and/or milling the talc ore to obtain a desired particle size distribution. For example, the talc particulate may be obtained by wet milling. The talc may, for example, be prepared by any of the methods disclosed EP 0971988 or EP 2146793, which are incorporated herein by reference.

The barrier compositions and/or polymer compositions, may, for example, be prepared by blending the talc particulate with one or more of the other ingredients present in the barrier composition or polymer composition. For example, the polymer composition may be made by blending the talc particulate with an elastomer.

Mixing of the polymer composition can be accomplished by methods known to those skilled in the art. For example, the ingredients may be mixed in multiple stages, for example one non-productive stage followed by a productive stage. The final curatives (e.g. sulphur vulcanizing agents) may be mixed in the final stage which is conventionally called the "productive" mix stage in which the mixing typically occurs at a temperature or ultimate temperature lower than the mix temperatures of the preceding and non-productive mix stages. The terms "non-productive" and "productive" mix stages are well known to those skilled in the art.

A tire inner lining composition may be formed into a gum strip (e.g. produced by a press or passing an elastomer compound through a mill, calender, extruder or other suitable means). Preferably, the gum strip is produced by a calender to obtain good uniformity. The uncured/unvulcanised gum strip may then be constructed as an inner surface (exposed inside surface) of an uncured rubber tire structure (e.g. the carcass). The inner lining of the tire is then co-cured/co-vulcanized (e.g. sulphur co-cured/co-vulcanized) with the tire carcass during the tire curing operation under conditions of heat and pressure. As a result, the inner lining may become an integral part of the tire.

Vulcanization is generally carried out, for example, at temperatures ranging from about 100 to about 200°C, preferably from about 110 to about 180°C. Any of the usual vulcanization processes may be used, such as heating in a press or mold, heating with superheated steam or hot salt or in a salt bath.

### EXAMPLES

### Example 1

A talc filler having a BET surface area of 15.3 m²/g and a d₅₀ of 9.5 µm (laser measurement as described above) was used to make a composition suitable for use as a tire inner lining.

## Claims

1. A barrier polymer composition comprising a talc particulate having a d₅₀ ranging from 7 µm to 13 µm and a BET surface area equal to or less than 23 m²/g, wherein the talc particulate has a d₂₅ ranging from 4.5 µm to 8.5 µm, wherein the particle size measurements are determine by light scattering according to the description.

2. The barrier polymer composition of claim 1, wherein the talc particulate has:
a d₅₀ ranging from 8 µm to 12 µm, for example from 8.5 µm to 11.5 µm; and/or
a BET surface area ranging from 8 to 22 m²/g or from 10 to 23 m²/g, or from 10 to 20 m²/g; and/or
a lamellarity index less than 5, for example ranging from 2.8 to 4.5; and/or
a d₉₅ ranging from 20 µm to 36 µm, for example from 22 µm to 34 µm; and/or
a d₇₅ ranging from 10 µm to 22 µm, for example from 12 µm to 20 µm; and/or
a d₂₅ ranging from 5 µm to 8 µm.

3. The barrier polymer composition of claim 1 or 2, wherein the talc particulate is or comprises a wet milled talc.

4. The barrier polymer composition according to any one of claims 1 to 3, comprising an elastomer, wherein the amount of talc particulate in the polymer composition ranges from 10 to 80 phr, for example from 20 to 50 phr.

5. The barrier polymer composition of claim 4, further comprising carbon black, optionally wherein the amount of carbon black in the polymer composition ranges from 10 to 100 phr, for example from 20 to 80 phr.

6. The barrier polymer composition of claim 4 or 5, wherein the total amount of talc and carbon black (if present) in the polymer composition ranges from 10 to 40 vol%.

7. The barrier polymer composition of any one of claims 4 to 6, wherein the polymer composition has an oxygen transmission rate equal to or less than 180 cm³/m²/day, for example equal to or less than 110 cm³/m²/day

8. The barrier polymer composition of any one of claims 4 to 7, wherein the polymer composition has a tensile strength of at least 6 MPa, for example at least 6.5 MPa

9. The barrier polymer composition of any one of claims 4 to 8, wherein the polymer composition has an elongation at break of at least 700%, for example at least 750%.

10. The barrier polymer composition of any one of claims 4 to 9, wherein the polymer composition has an elastic modulus (100%) of at least 0.6 MPa for example at least 0.8 MPa.

11. The barrier polymer composition of any one of claims 4 to 10, wherein the polymer composition has an elastic modulus (300%) of at least 1.8 MPa for example at least 2 MPa.

12. The barrier polymer composition of any one of claims 4 to 11, wherein the polymer composition has a Shore A hardness of at least about 35, for example at least 38.

13. A tire having an inner lining comprising a barrier polymer composition of any one of claims 1 to 12.

## Patentansprüche

1. Barrierepolymer-Zusammensetzung, umfassend Talkpartikel, die eine d₅₀ in einem Bereich von 7 µm bis 13 µm und eine BET-Oberfläche von gleich wie oder weniger als 23 m²/g aufweisen, wobei die Talkpartikel eine d₂₅ in einem Bereich von 4,5 µm bis 8,5 µm aufweisen, wobei die Partikelgrößenmessungen durch Lichtstreuung gemäß der Beschreibung bestimmt werden.

2. Barriere-Polymerzusammensetzung gemäß Anspruch 1, wobei die Talkpartikel Folgendes aufweisen:
eine d₅₀ in einem Bereich von 8 µm bis 12 µm, z. B. von 8,5 µm bis 11,5 µm; und/oder
eine BET-Oberfläche in einem Bereich von 8 bis 22 m²/g oder von 10 bis 23 m²/g oder von 10 bis 20 m²/g; und/oder
einen Lamellaritätsindex von weniger als 5, z. B. in einem Bereich von 2,8 bis 4,5; und/oder
eine d₉₅ in einem Bereich von 20 µm bis 36 µm, z. B. von 22 µm bis 34 µm; und/oder
eine d₇₅ in einem Bereich von 10 µm bis 22 µm, z. B. von 12 µm bis 20 µm, und/oder
eine d₂₅ in einem Bereich von 5 µm bis 8 µm.

3. Barrierepolymer-Zusammensetzung gemäß Anspruch 1 oder 2, wobei die Talkpartikel ein nass gemahlener Talk sind oder diesen umfassen.

4. Barrierepolymer-Zusammensetzung gemäß einem der Ansprüche 1 bis 3, umfassend ein Elastomer, wobei die Menge an Talkpartikeln in der Polymerzusammensetzung in einem Bereich von 10 bis 80 phr, beispielsweise 20 bis 50 phr, ist.

5. Barrierepolymer-Zusammensetzung gemäß Anspruch 4, ferner umfassend Ruß, optional wobei die Menge an Ruß in der Polymerzusammensetzung in einem Bereich von 10 bis 100 phr, beispielsweise von 20 bis 80 phr, ist.

6. Barrierepolymer-Zusammensetzung gemäß Anspruch 4 oder 5, wobei die Gesamtmenge an Talk und Ruß (wenn vorhanden) in der Polymerzusammensetzung in einem Bereich von 10 bis 40 Volumenprozent ist.

7. Barrierepolymer-Zusammensetzung gemäß einem der Ansprüche 4 bis 6, wobei die Polymerzusammensetzung eine Sauerstoffdurchlässigkeit von gleich wie oder weniger als 180 cm³/m²/Tag, zum Beispiel gleich wie oder weniger als 110 cm³/m²/Tag, aufweist.

8. Barriere-Polymerzusammensetzung gemäß einem der Ansprüche 4 bis 7, wobei die Polymerzusammensetzung eine Zugfestigkeit von mindestens 6 MPa, beispielsweise mindestens 6,5 MPa, aufweist.

9. Barrierepolymer-Zusammensetzung gemäß einem der Ansprüche 4 bis 8, wobei die Polymerzusammensetzung eine Bruchdehnung von mindestens 700 %, beispielsweise mindestens 750 %, aufweist.

10. Barriere-Polymerzusammensetzung gemäß einem der Ansprüche 4 bis 9, wobei die Polymerzusammensetzung einen Elastizitätsmodul (100 %) von mindestens 0,6 MPa, beispielsweise mindestens 0,8 MPa, aufweist.

11. Barrierepolymer-Zusammensetzung gemäß einem der Ansprüche 4 bis 10, wobei die Polymerzusammensetzung einen Elastizitätsmodul (300 %) von mindestens 1,8 MPa, beispielsweise mindestens 2 MPa, aufweist.

12. Barrierepolymer-Zusammensetzung gemäß einem der Ansprüche 4 bis 11, wobei die Polymerzusammensetzung eine Shore-A-Härte von mindestens 35, beispielsweise mindestens 38, aufweist.

13. Reifen, der eine Innenschicht aufweist, umfassend eine Barriere-Polymerzusammensetzung gemäß einem der Ansprüche 1 bis 12.

## Revendications

1. Une composition de polymère barrière comprenant des particules de talc ayant un d₅₀ compris entre 7 µm et 13 µm et une surface BET égale ou inférieure à 23 m²/g, dans laquelle les particules de talc ont un d₂₅ compris entre 4,5 µm et 8,5 µm, dans laquelle les mesures de taille des particules sont déterminées par la diffusion de la lumière selon la description.

2. La composition de polymère barrière selon la revendication 1, dans laquelle les particules de talc ont :
un d₅₀ compris entre 8 µm et 12 µm, par exemple entre 8,5 µm et 11,5 µm ; et/ou
une surface BET comprise entre 8 et 22 m²/g, ou entre 10 et 23 m²/g, ou entre 10 et 20 m²/g ; et/ou
un indice de lamellarité inférieur à 5, par exemple compris entre 2,8 et 4,5 ; et/ou
un d₉₅ compris entre 20 µm et 36 µm, par exemple entre 22 µm et 34 µm ; et/ou
un d₇₅ compris entre 10 µm et 22 µm, par exemple entre 12 µm et 20 µm ; et/ou
un d₂₅ compris entre 5 µm et 8 µm.

3. La composition de polymère barrière selon la revendication 1 ou 2, dans laquelle les particules de talc sont ou comprennent un talc broyé par voie humide.

4. La composition de polymère barrière selon l'une quelconque des revendications 1 à 3, comprenant un élastomère, dans laquelle la quantité de particules de talc dans la composition polymère est comprise entre 10 et 80 phr, par exemple entre 20 et 50 phr.

5. La composition de polymère barrière selon la revendication 4, comprenant en outre du noir de carbone, dans laquelle la quantité de noir de carbone dans la composition polymère est éventuellement comprise entre 10 et 100 phr, par exemple entre 20 et 80 phr.

6. La composition de polymère barrière selon la revendication 4 ou 5, dans laquelle la quantité totale de talc et de noir de carbone (s'il est présent) dans la composition polymère est comprise entre 10 et 40 % en volume.

7. La composition de polymère barrière selon l'une quelconque des revendications 4 à 6, dans laquelle la composition polymère a un taux de transmission d'oxygène égal ou inférieur à 180 cm³/m²/jour, par exemple égal ou inférieur à 110 cm³/m²/jour.

8. La composition de polymère barrière selon l'une quelconque des revendications 4 à 7, dans laquelle la composition polymère a une résistance à la traction d'au moins 6 MPa, par exemple d'au moins 6,5 MPa.

9. La composition de polymère barrière selon l'une quelconque des revendications 4 à 8, dans laquelle la composition polymère a un allongement à la rupture d'au moins 700 %, par exemple d'au moins 750 %.

10. La composition de polymère barrière selon l'une quelconque des revendications 4 à 9, dans laquelle la composition polymère a un module élastique (100 %) d'au moins 0,6 MPa, par exemple d'au moins 0,8 MPa.

11. La composition de polymère barrière selon l'une quelconque des revendications 4 à 10, dans laquelle la composition polymère a un module élastique (300 %) d'au moins 1,8 MPa, par exemple d'au moins 2 MPa.

12. La composition de polymère barrière selon l'une quelconque des revendications 4 à 11, dans laquelle la composition polymère a une dureté Shore A d'au moins 35, par exemple d'au moins 38.

13. Un pneu ayant une doublure interne comprenant une composition de polymère barrière selon l'une quelconque des revendications 1 à 12.
